# FASCICULE DE BREVET EUROPEEN

(11) **EP 2 329 911 B1**
(45) Date de publication et mention de la délivrance du brevet: **09.05.2012**
(21) Numéro de dépôt: 10192852.1
(22) Date de dépôt: 29.11.2010
(51) Int. Cl.: B23P 19/04, F02F 5/00, B25B 27/12

(54) **Procédé et dispositif de serrage des segments d'un piston lors du montage de l'ensemble bielle, axe et piston dans le cylindre du bloc moteur d'un véhicule**
Verfahren und Vorrichtung zum Spannen eines Kolbenrings bei der Montage einer Anordnung aus Pleuelstange, Kolbenbolzen und Kolben im Zylinder des Motorblocks eines Fahrzeugs
Method and device for clamping piston rings during the assembly of the connecting rod, pin and piston group in the cylinder of the engine block of a vehicle

(30) Priorité: 02.12.2009 FR 0958572
(43) Date de publication de la demande: 08.06.2011
(73) Titulaire: Peugeot Citroën Automobiles SA, 78140 Vélizy-Villacoublay (FR)
(72) Inventeur: Gilles, Frédéric, 77310 Orgenoy (FR); Sonet, Alain, 60560 Orry La Ville (FR); Trouillet, Norbert, 93400 Saint Ouen (FR)

(56) Documents cités:
- EP-A1- 1 114 692
- FR-A1- 2 721 849
- JP-A- 8 118 165
- JP-A- 10 128 630
- US-A- 5 592 740
- US-A1- 2001 024 044

## Description

La présente invention concerne un procédé de serrage des segments d'un piston lors du montage de l'ensemble bielle, axe, piston dans le cylindre du bloc moteur d'un véhicule, avec une pluralité de points de serrage circonférentiels sur le pourtour des segments, en particulier d'un véhicule automobile. Elle concerne également un dispositif de serrage, qui utilise un tel procédé.

L'introduction d'un ensemble bielle, axe, piston, dénommé aussi ensemble « BAP » dans la suite du texte, dans le cylindre d'un bloc moteur de véhicule consiste, de manière connue en soi, à réaliser le serrage des segments à l'aide d'une pince pneumatique, à introduire ledit ensemble BAP (avec les segments serrés sur le piston) dans un cône posé sur le moteur dans l'axe du cylindre et à pousser l'ensemble dans le cône, puis dans le cylindre du bloc moteur.

Actuellement, les postes automatiques de réalisation de cette introduction utilisent, de manière connue en soi également, des pinces de serrage, qui viennent serrer les segments simultanément sur plusieurs points.

L'amélioration des performances des moteurs impose la conception de segments de piston de plus en plus fins et, par conséquent, de plus en plus fragiles.

Des moyens de positionnement de segments de piston sont déjà connus de l'art antérieur.

A titre d'exemple, le document US 5 592 740 décrit un procédé d'assemblage d'un segment de piston dans la rainure circonférentielle d'un piston. Plusieurs parties ou éléments de logement du segment, qui peuvent être déplacés radialement autour d'un axe commun entre une position « resserrée », plus proche de l'axe, et une position « déployée », plus éloignée de l'axe, sont positionnés de façon à former ensemble une ouverture circulaire concentrique à cet axe commun et une gorge de réception du segment de piston concentrique à cette ouverture circulaire. Ces éléments de logement sont déplacés de la position « resserrée » à la position « déployée » lorsque le segment est détendu de façon à ensemble élargir l'ouverture circulaire pour recevoir le piston et élargir la gorge pour maintenir le segment détendu sensiblement concentrique audit axe commun. Une pluralité de doigts d'expansion du segment, qui peuvent être déplacés radialement et axialement, sont positionnés autour de l'axe commun, et peuvent être mis en place dans l'ouverture circulaire pour détendre radialement le segment maintenu à l'intérieur de la gorge. Le piston est déplacé selon l'axe commun à l'intérieur de l'ouverture circulaire élargie d'une manière telle que les doigts sont déplacés axialement en se dégageant du segment détendu dans la gorge élargie tandis que la rainure du piston est déplacée pour recevoir le segment détendu de la gorge.

Il est également connu du document US2001 /024044 un procédé de serrage de segments d'un piston lors du montage de l'ensemble bielle-axe-piston dans le cylindre d'un bloc moteur, qui prévoit une pluralité de points de serrage circonférentiels sur le pourtour des segments. Le document décrit le préambule des revendications 1 et 6.

Le but de la présente invention est de fournir un nouveau procédé de serrage des segments d'un piston lors du montage de l'ensemble BAP dans le cylindre du bloc moteur d'un véhicule, qui facilite le bon positionnement des segments du piston dans la gorge du piston avant l'introduction de ce dernier dans le cylindre du bloc moteur et, en particulier, limite les risques de casse des segments lors du serrage et lors de cette opération d'introduction.

Un autre but de la présente invention est de fournir un tel procédé, qui permette de traiter des segments de piston fins et de réduire les défauts de qualité sur l'opération d'introduction de l'ensemble BAP dans le cylindre du bloc moteur.

Enfin, c'est également un but de la présente invention de fournir un dispositif de serrage des segments utilisant le procédé de l'invention, qui soit d'encombrement réduit et qui soit économique, en particulier parce qu'il peut être facilement adapté aux multiples lignes d'assemblage existantes ou futures.

Pour parvenir à ces buts, la présente invention a pour objet un nouveau procédé de serrage des segments d'un piston lors du montage de l'ensemble BAP dans le cylindre du bloc moteur d'un véhicule. Dans ce nouveau procédé, il est prévu une pluralité de points de serrage circonférentiels sur le pourtour des segments et les segments sont serrés « en escargot », c'est-à-dire progressivement et de façon décalée sur les différents points de serrage circonférentiels. De cette façon, les segments sont contraints de manière progressive et trouvent plus naturellement leur place dans les gorges correspondantes du piston.

Selon la présente invention, il est prévu au moins quatre points de serrage circonférentiels répartis sur le pourtour des segments, et, selon un mode préféré de réalisation, ces points de serrage circonférentiels sont au nombre de six, répartis selon un pas angulaire sensiblement constant sur le pourtour des segments.

Selon la présente invention également, les bords de coupe des segments ne sont pas situés à plus de 60° d'angle d'un point de serrage circonférentiel.

Le procédé de l'invention s'applique, de manière avantageuse et simultanée, aux trois segments du piston, à savoir le segment de feu, le segment d'étanchéité et le segment racleur.

La présente invention a également pour objet un dispositif de serrage pour la mise en oeuvre du procédé de serrage décrit ci-dessus dans ses grandes lignes.

Ce dispositif comprend une pluralité de doigts de serrage, parallèles entre eux, destinés à serrer chacun les segments en un des points de serrage circonférentiels de ladite pluralité de points de serrage, et un moyen de commande pour piloter progressivement et de façon décalée les doigts de serrage et effectuer, ainsi, le serrage « en escargot » des segments.

Selon un premier mode de réalisation du dispositif de serrage, les doigts de serrage sont portés chacun par une pince de serrage pneumatique, et le moyen de commande pour piloter progressivement et de façon décalée les doigts de serrage est constitué par un automate programmé qui pilote de manière indépendante les différentes pinces de serrage.

De manière avantageuse, chaque doigt de serrage est mis en place sur un mors de la pince de serrage correspondante, l'autre mors de ladite pince n'étant pas utilisé.

Selon une variante de réalisation du dispositif de l'invention, les doigts de serrage sont pilotés par une commande unique.

Cette commande unique comporte un vérin de pilotage pneumatique unique et un mécanisme de déplacement des doigts de serrage selon un ordre chronologique donné, lequel mécanisme est commandé par ledit vérin de pilotage pneumatique unique.

De manière préférentielle, le mécanisme de déplacement des doigts de serrage comporte, pour chaque doigt de serrage, une rainure avec une came de pilotage d'un galet associé au doigt de serrage, de telle sorte que, lorsque le galet rencontre la came de pilotage, cette dernière provoque un mouvement de rotation du doigt de serrage permettant alors au doigt de venir serrer les segments.

De préférence, le moment du déclenchement du mouvement de chaque doigt de serrage est réglable, à l'exception du mouvement d'un seul doigt qui sert de référence, et ce réglage est obtenu grâce à une cale de réglage qui positionne la came associée audit doigt de serrage.

De préférence également, le diamètre de serrage des segments est réglable, et le réglage est obtenu par utilisation d'un cylindre étalon. Pour chaque doigt de serrage, le galet dans la came correspondante est avancé pour effectuer la rotation du doigt, un excentrique étant associé audit doigt dont le réglage permet la contrainte de serrage des segments.

De manière avantageuse, les doigts de serrage sont étagés de façon à permettre de serrer les trois segments du piston.

D'autres buts, avantages et caractéristiques de l'invention apparaîtront dans la description qui suit de deux modes de réalisation, non limitatifs de l'objet et de la portée de la présente demande de brevet, accompagnée de dessins dans lesquels :

- la figure 1 est une vue en coupe, schématique, illustrant le montage d'un segment de piston sur une tête de piston,

- la figure 2 représente, de manière schématique, un segment de piston et la répartition des points de serrage sur la circonférence du segment, selon le procédé de la présente invention,

- la figure 3 représente, de manière schématique, un exemple de dispositif de serrage à plusieurs pinces à commandes pneumatiques indépendantes pour la mise en oeuvre du procédé selon la présente invention,

- la figure 4 est une vue agrandie d'une pince pneumatique du dispositif de serrage de la figure 3,

- la figure 5 est une vue frontale, en perspective, d'une variante de réalisation du dispositif de serrage de l'invention, avec une commande unique des différents doigts de serrage des segments,

- la figure 6 est une vue en perspective, du dispositif de la figure 5, en position inversée, de façon à mieux montrer le mécanisme de mise en rotation des doigts de serrage,

- la figure 7 est une vue de dessous du dispositif des figures 5 et 6, et

- la figure 8 est une vue en perspective d'un doigt de serrage, des moyens de réglage du doigt et des moyens de figer le réglage.

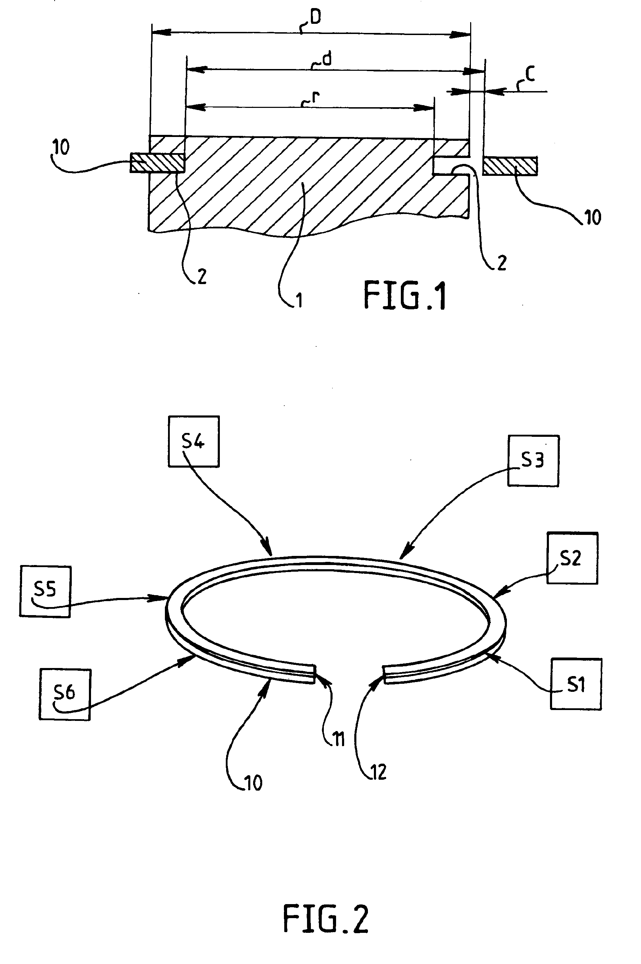

On a représenté sur la figure 1 un segment de piston référencé 10, de diamètre interne « d ». Ce segment 10 est, de manière classique, un anneau élastique ouvert qui se loge dans une rainure 2, de diamètre interne « r », faite dans la tête du piston 1 de diamètre « D ».

Sur un piston de moteur de véhicule automobile, on trouve, en général, trois segments. Ils assurent l'étanchéité entre la chambre de combustion et le carter d'huile du vilebrequin. Ils sont utilisés aussi pour l'évacuation de la chaleur vers le cylindre.

Le serrage correct des segments dans leur rainure de piston et, en conséquence, l'introduction correcte au montage du moteur de l'ensemble BAP dans le cylindre correspondant du bloc moteur, dépend de facteurs géométriques, en particulier de la cote « c », représentée sur la figure 1. Plus la cote « c » est importante, plus le segment 10 a tendance, lors du serrage du segment, d'une part, à vouloir sortir de sa rainure 2. En outre, avec une cote « c » importante, le segment présente le risque de sortir de sa rainure, de venir se mettre de travers, de subir alors des contraintes dans le cylindre de bloc moteur qui peuvent provoquer sa cassure.

L'invention s'applique au serrage des segments de piston lors du montage de l'ensemble BAP dans le cylindre du bloc moteur d'un véhicule. Son principe, en référence au dessin de la figure 2, consiste à serrer le segment de piston 10 selon un mode de serrage dit « en escargot », c'est-à-dire à serrer le segment 10 progressivement et de façon décalée sur plusieurs points, au moins 6. Ces points de serrage, désignés S1, S2, S3, S4, S5 et S6 sont également appelés dans la suite du texte « points de serrage circonférentiels » du fait de leur position sur la circonférence du segment. Ainsi, l'opération de serrage, selon l'invention, s'effectue selon les points de serrage mentionnés et dans l'ordre chronologique de S1 à S6, de telle sorte que le segment est contraint de manière progressive et trouve plus naturellement sa place dans la gorge correspondante du piston.

Les six points de serrage circonférentiels S1 à S6 sont répartis selon un pas angulaire sensiblement constant sur le pourtour du segment 10.

Des essais réalisés par la Demanderesse ont permis de montrer que ce principe de serrage progressif, en « escargot », nécessitait un nombre minimal de quatre points de serrage circonférentiels. Ces essais ont montré également que si l'un des deux bords 11 ou 12 de la coupe du segment 10 (figure 2) étant situé à plus de 60 d'angle d'un point de serrage circonférentiel, le segment s'ouvre et ne pénètre pas dans sa gorge.

La présente invention concerne aussi un dispositif de serrage pour la mise en oeuvre du principe exposé ci-dessus.

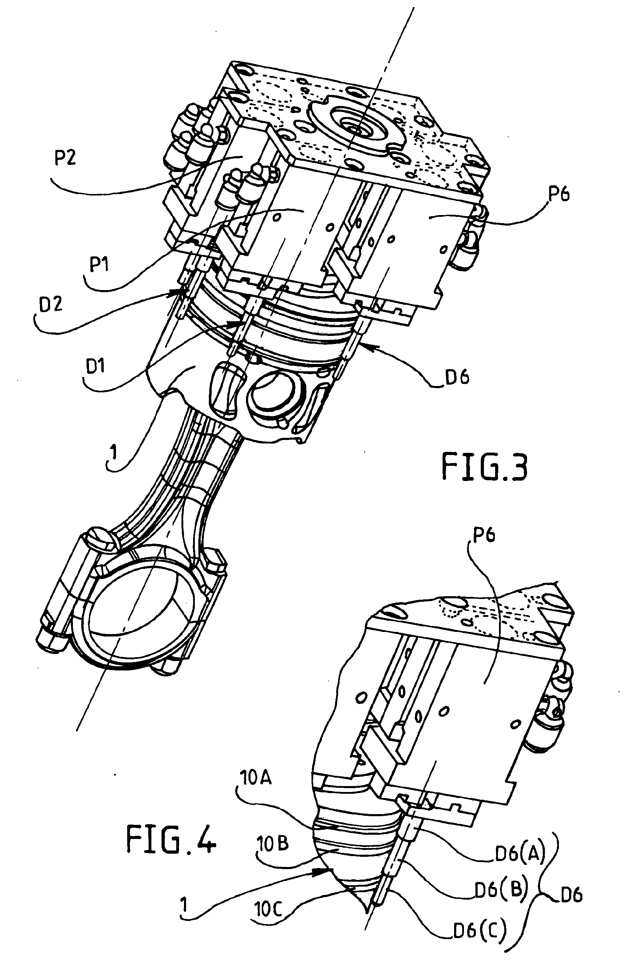

En référence au dessin de la figure 3, le dispositif de serrage est composé de six pinces de serrage pneumatiques P1 à P6 à mors parallèles avec chacune un doigt de serrage D1 à D6 mis en place sur un seul mors de la pince de serrage (l'autre mors de la pince n'est pas utilisé). Pour des raisons de représentation graphique, seules les pinces P1, P2 et P6 avec leur doigt de serrage correspondant, à savoir D1, D2 et D6, sont représentées. Chaque doigt de serrage est étagé pour permettre de serrer les trois segments 10A, 10B et 10C, comme montré sur la figure 4 représentant le doigt de serrage D6 étagé en trois parties cylindriques D6(A), D6(B) et D6(C) correspondantes aux trois segments, à savoir le segment de feu 10A, le segment d'étanchéité 10B et le segment racleur 10C.

Chaque pince de serrage pneumatique, P1 à P6, est reliée à un distributeur pneumatique (non représenté). L'automate du dispositif ou poste de serrage peut piloter de façon indépendante chaque pince.

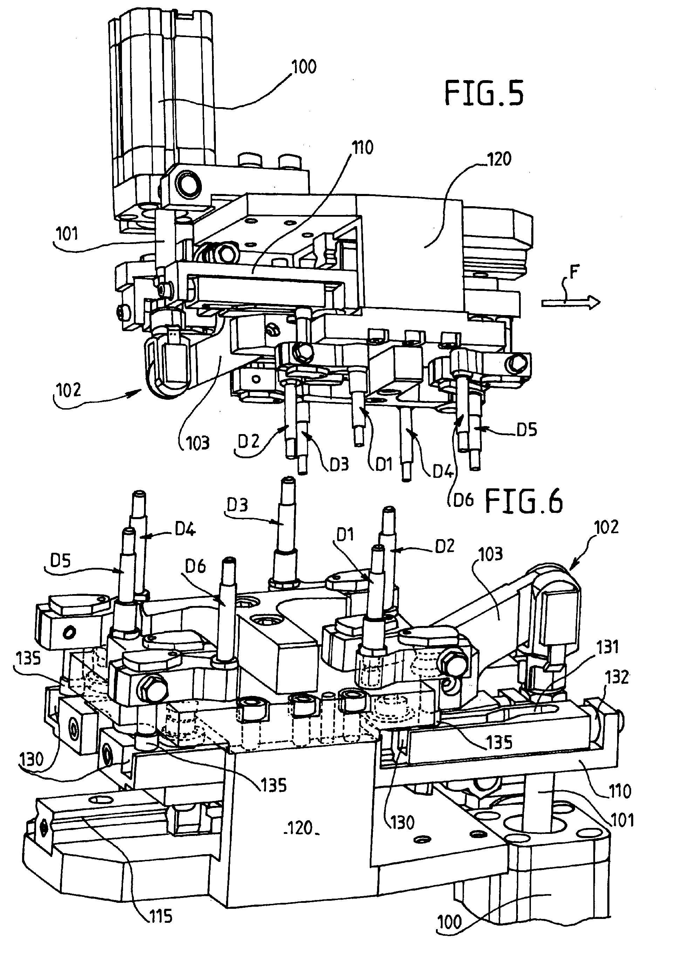

Une variante du dispositif de serrage selon l'invention est décrite ci-dessous en référence aux figures 5 à 8. Dans cette variante, les pièces identiques aux pièces des figures 3 et 4 sont désignées par les mêmes références numériques.

Le dispositif de serrage, à la différence du mode de réalisation précédemment décrit, présente une seule commande des doigts de serrage D1 à D6, représentée par le vérin de pilotage 100, lequel assure par l'intermédiaire de sa tige 101, une articulation 102 et un bras 103, la translation selon la direction illustrée par la flèche D d'un tiroir coulissant 110.

Le tiroir coulissant 110 est monté, de manière classique et connue en soi, mobile en translation sur un rail de coulissement 115 (figure 6) solidaire d'une plaque support 120 du dispositif.

Sur le tiroir coulissant 110 sont implantées des rainures de guidage désignées collectivement 130, chacune avec une came 131 pour le pilotage d'un doigt de serrage. Dans chacune de ces rainures 130 est monté un galet, de référence collective 135, associé à l'un des doigts de serrage D1 à D6. Les doigts de serrage D1 à D6 sont montés sur la plaque support 120 de telle sorte qu'ils ne présentent qu'un seul degré de liberté de mouvement en rotation leur permettant, par ce mouvement, de venir presser les segments. Lorsque le galet 135, associé à un doigt de serrage donné, rencontre la came 131 de la rainure de guidage 130 correspondante, celle-ci provoque le mouvement de rotation du doigt de serrage donné qui vient serrer les segments.

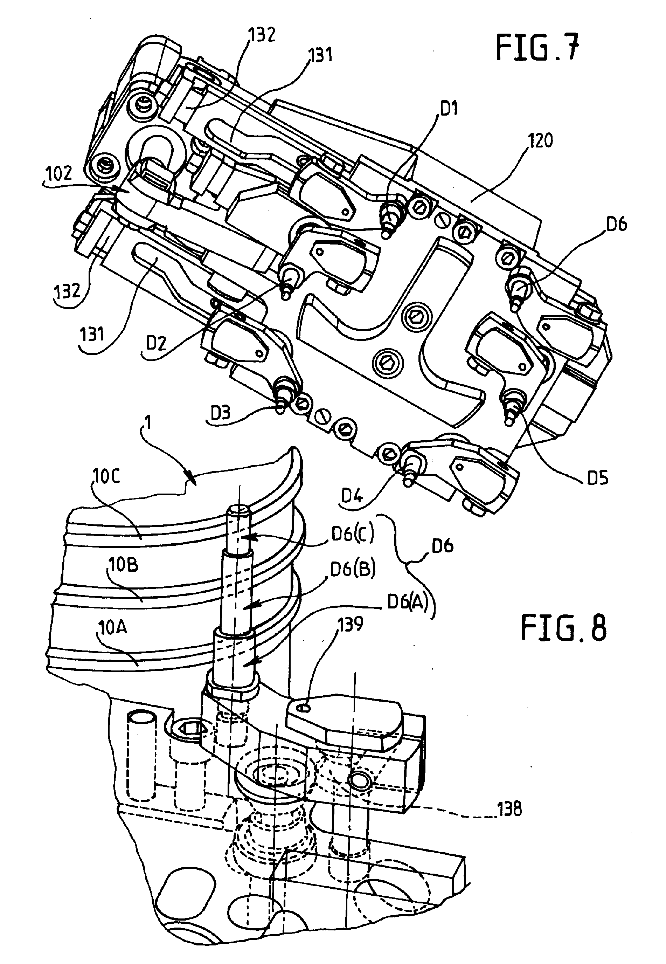

Le moment du déclenchement du mouvement de chaque doigt de serrage est réglable, à l'exception d'un seul doigt qui sert de référence : le doigt de serrage D5. Le réglage de chaque doigt de serrage réglable est effectué grâce à une cale de réglage, de référence collective 132 (figure 7, en particulier).

On notera qu'il est possible de déclencher les doigts de serrage dans l'ordre que l'on souhaite.

Les principes et procédés de réglage du dispositif de serrage ci-dessus sont exposés ci-dessous.

En ce qui concerne le réglage du diamètre de serrage, on utilise un cylindre étalon, qui est mis en référence contre le dispositif fixe. On avance les galets 135 dans les cames 131 pour effectuer la rotation des doigts de serrage, et on règle alors l'excentrique référence 138 pour contraindre les segments 10.

En ce qui concerne le réglage de l'ordre de déclenchement des doigts de serrage, on règle les cales de réglage 132. Le doigt fixe D5, qui sert de référence, sera le premier à se déclencher.

Les réglages du diamètre de serrage et de l'ordre de déclenchement des doigts de serrage se conduisent simultanément, et lorsqu'ils sont réalisés, on vient placer une goupille dans l'orifice 139 pour les figer (figure 8).

Sur le plan mécanique, le mode de réalisation à commande unique du dispositif de serrage représenté sur les figures 5 à 8 est plus complexe que celui représenté sur les figures 3 et 4 à commande multiple. Toutefois, ce mode de réalisation à commande unique facilite la mise en oeuvre du câblage et de la programmation, présente l'avantage de réglages figés et n'est pas tributaire des temps de réponse des actionneurs pneumatiques individuels.

Le dispositif de serrage des segments de piston décrits ci-dessus dans différentes variantes de réalisation présente de nombreux avantages, parmi lesquels les avantages suivants :

- il permet un excellent serrage des segments lors du montage de l'ensemble bielle axe piston dans le cylindre d'un bloc moteur de véhicule,

- il nécessite un entretien minimal,

- il est d'un encombrement réduit, la dimension des pinces de serrage permettant de monter les quatre ensembles bielle/axe/piston en même temps.

## Revendications

1. Procédé de serrage des segments d'un piston lors du montage de l'ensemble bielle-axe-piston dans le cylindre du bloc moteur d'un véhicule, avec une pluralité de points de serrage circonférentiels sur le pourtour des segments (10) **caractérisé en ce que** les segments sont serrés « en escargot », c'est-à-dire progressivement et de façon décalée sur les différents points de serrage circonférentiels, de telle sorte qu'ils sont contraints de manière progressive et trouvent plus naturellement leur place dans les gorges (2) correspondantes du piston (1).

2. Procédé selon la revendication 1, **caractérisé en ce qu'**il est prévu au moins quatre points de serrage circonférentiels répartis sur le pourtour des segments (10).

3. Procédé selon la revendication 1, **caractérisé en ce qu'**il est prévu six points de serrage circonférentiels (S1 à S6) répartis selon un pas angulaire sensiblement constant sur le pourtour des segments (10).

4. Procédé selon l'une quelconque des revendications 1 à 3, **caractérisé en ce que** les bords de coupe des segments (11, 12) ne sont pas situés à plus de 60° d'angle d'un point de serrage circonférentiel.

5. Procédé selon l'une quelconque des revendications 1 à 3, **caractérisé en ce qu'**il s'applique simultanément aux trois segments du piston (1), à savoir le segment de feu (10A), le segment d'étanchéité (10B) et le segment racleur (10C).

6. Dispositif de serrage des segments d'un piston lors du montage de l'ensemble bielle-axe-piston dans le cylindre d'un bloc moteur de véhicule pour la mise en oeuvre du procédé de serrage conforme à l'une quelconque des revendications précédentes, ledit dispositif comprenant une pluralité de doigts de serrage (D1 à D6), parallèles entre eux, destinés à serrer chacun les segments en un des points de serrage circonférentiels de ladite pluralité de points de serrage, **caractérisé en ce que** ledit dispositif prévoit un moyen de commande pour piloter progressivement et de façon décalée les doigts de serrage (D1 à D6) et effectuer, ainsi, le serrage « en escargot » des segments (10 ; 10A, 10B, 10C).

7. Dispositif selon la revendication 6, **caractérisé en ce que** les doigts de serrage (D1 à D6) sont portés chacun par une pince de serrage pneumatique (P1 à P6), et **en ce que** le moyen de commande pour piloter progressivement et de façon décalée les doigts de serrage (D1 à D6) est constitué par un automate programmé qui pilote de manière indépendante les différentes pinces de serrage (P1 à P6).

8. Dispositif selon la revendication 6, **caractérisé en ce que** les doigts de serrage (D1 à D6) sont pilotés par une commande unique.

9. Dispositif selon la revendication 8, **caractérisé en ce que** ladite commande unique comporte un vérin de pilotage pneumatique (100) unique et un mécanisme de déplacement des doigts de serrage (D1 à D6) selon un ordre chronologique donné, lequel mécanisme est commandé par ledit vérin de pilotage pneumatique unique (100).

10. Dispositif selon la revendication 9, **caractérisé en ce que** ledit mécanisme de déplacement des doigts de serrage (D1 à D6) comporte, pour chaque doigt de serrage, une rainure (130) avec une came (131) de pilotage d'un galet (135) associé au doigt de serrage, de telle sorte que, lorsque le galet (135) rencontre la came (131) de pilotage, cette dernière provoque un mouvement de rotation du doigt de serrage permettant alors au doigt de serrer les segments.

11. Dispositif selon la revendication 10, **caractérisé en ce que** le diamètre de serrage des segments est réglable.

12. Dispositif selon la revendication 11, **caractérisé en ce que** le réglage du diamètre de serrage des segments est obtenu par utilisation d'un cylindre étalon, et **en ce que**, pour chaque doigt de serrage, le galet (135) dans la came (131) correspondante est avancé pour effectuer la rotation du doigt, un excentrique (138) étant associé audit doigt dont le réglage permet la contrainte de serrage des segments.

## Claims

1. A method for clamping rings of a piston on mounting of the connecting rod-axis-piston assembly in the cylinder of the engine block of a vehicle, with a plurality of circumferential clamping points on the periphery of the rings (10), **characterized in that** the rings are clamped "in the manner of a snail", i.e. progressively and in a staggered manner on the different circumferential clamping points, such that they are stressed progressively and find their place more naturally in the corresponding grooves (2) of the piston (1).

2. The method according to Claim 1, **characterized in that** at least four circumferential clamping points are provided, distributed over the periphery of the rings (10).

3. The method according to Claim 1, **characterized in that** six circumferential clamping points (S1 to S6) are provided, distributed along a substantially constant angular pitch over the periphery of the rings (10).

4. The method according to any one of Claims 1 to 3, **characterized in that** the cutting edges of the rings (11, 12) are not situated at an angle of more than 60° from a circumferential clamping point.

5. The method according to any one of Claims 1 to 3, **characterized in that** it applies simultaneously to the three rings of the piston (1), namely the top ring (10A), the sealing ring (10B) and the oil ring (10C).

6. A device for clamping rings of a piston on mounting of the connecting rod-axis-piston assembly in the cylinder of an engine block of a vehicle for implementing the clamping method according to any one of the preceding claims, the said device comprising a plurality of clamping fingers (D1 to D6), parallel with each other, intended to each clamp the rings in one of the circumferential clamping points of the said plurality of clamping points, **characterized in that** the said device provides a control means for guiding progressively and in a staggered manner the clamping fingers (D1 to D6) and to thus carry out the clamping "in the manner of a snail" of the rings (10; 10A, 10B, 10C).

7. The device according to Claim 6, **characterized in that** the clamping fingers (D1 to D6) are each carried by a pneumatic pinch clamp (P1 to P6), and **in that** the control means for guiding the clamping fingers (D1 to D6) progressively and in a staggered manner is constituted by a programmed automaton which guides in an independent manner the different pinch clamps (P1 to P6).

8. The device according to Claim 6, **characterized in that** the clamping fingers (D1 to D6) are guided by a single control.

9. The device according to Claim 8, **characterized in that** the single control comprises a single pneumatic guide jack (100) and a mechanism for moving the clamping fingers (D1 to D6) according to a given chronological order, which mechanism is controlled by the said single pneumatic guide jack (100).

10. The device according to Claim 9, **characterized in that** the said mechanism for moving the clamping fingers (D1 to D6) comprises, for each clamping finger, a slot (130) with a cam (131) for guiding a runner (135) associated with the clamping finger such that, when the runner (135) meets the guiding cam (131), the latter causes a rotational movement of the clamping finger, then permitting the finger to clamp the rings.

11. The device according to Claim 10, **characterized in that** the clamping diameter of the rings is adjustable.

12. The device according to Claim 11, **characterized in that** the adjustment of the clamping diameter of the rings is obtained by the use of a standard cylinder, and **in that**, for each clamping finger, the runner (135) in the corresponding cam (131) is advanced to carry out the rotation of the finger, an eccentric (138) being associated with the said finger, the adjusting of which permits the clamping stress of the rings.

## Patentansprüche

1. Verfahren zum Spannen der Kolbenringe bei der Montage der Anordnung aus Pleuelstange, Kolbenbolzen und Kolben im Zylinder des Motorblocks eines Fahrzeugs, mit mehreren umfänglichen Spannpunkten auf dem Umfang der Rings (10), **dadurch gekennzeichnet, dass** die Ringe "schneckenförmig" angespannt werden, das heißt allmählich und auf den verschiedenen umfänglichen Spannpunkten versetzt, so dass sie allmählich angespannt werden und natürlicher ihren Platz in den dem Kolben (1) entsprechenden Hohlkehlen (2) finden.

2. Verfahren nach Anspruch 1, **dadurch gekennzeichnet, dass** mindestens vier umfängliche Spannpunkte, die auf dem Umfang der Ringe (10) verteilt sind, vorgesehen sind.

3. Verfahren nach Anspruch 1, **dadurch gekennzeichnet, dass** sechs umfängliche Spannpunkte (S1 bis S6) vorgesehen sind, die gemäß einem im Wesentlichen konstanten Winkelschritt auf dem Umfang der Ringe (10) verteilt sind.

4. Verfahren nach einem der Ansprüche 1 bis 3, **dadurch gekennzeichnet, dass** die Schnittkanten der Ringe (11, 12) in nicht mehr als 60° Winkel von einem umfänglichen Spannpunkt liegen.

5. Verfahren nach einem der Ansprüche 1 bis 3, **dadurch gekennzeichnet, dass** es gleichzeitig an drei Kolbenringe (1) angewandt wird, nämlich an den Feuersteg (10A), den Kompressionsring (10B) und den Abstreifring (10C).

6. Vorrichtung zum Spannen der Kolbenringe bei der Montage der Anordnung aus Pleuelstange, Kolbenbolzen und Kolben in dem Zylinder eines Motorblocks eines Fahrzeugs zum Umsetzen des Spannverfahrens nach einem der vorhergehenden Ansprüche, wobei die Vorrichtung mehrere Spannfinger (D1 bis D6), die untereinander parallel sind, aufweist, die dazu bestimmt sind, jeden der Ringe an einem der umfänglichen Spannpunkte der mehreren Spannpunkte zu spannen, **dadurch gekennzeichnet, dass** die Vorrichtung ein Steuermittel zum allmählichen und versetzten Steuern der Spannfinger (D1 bis D6) vorsieht und daher das "schneckenförmige" Spannen der Ringe (10; 10A, 10B, 10C) durchzuführen.

7. Vorrichtung nach Anspruch 6, **dadurch gekennzeichnet, dass** die Spannfinger (D1 bis D6) jeweils von einer pneumatischen Spannzange (P1 bis P6) getragen werden, und dass das Steuermittel zum allmählichen und versetzten Steuern der Spannfinger (D1 bis D6) aus einem programmierten Automaten besteht, der die verschiedenen Spannzangen (P1 bis P6) unabhängig steuert.

8. Vorrichtung nach Anspruch 6, **dadurch gekennzeichnet, dass** die Spannfinger (D1 bis D6) von einer einzigen Steuerung gesteuert werden.

9. Vorrichtung nach Anspruch 8, **dadurch gekennzeichnet, dass** die einzige Steuerung einen einzigen pneumatischen Steuerzylinder (100) und einen Mechanismus zum Verlagern der Spannfinger (D1 bis D6) gemäß einer gegebenen zeitlichen Reihenfolge aufweist, wobei der Mechanismus von dem einzigen pneumatischen Steuerzylinder (100) gesteuert wird.

10. Vorrichtung nach Anspruch 9, **dadurch gekennzeichnet, dass** der Mechanismus zum Verlagern der Spannfinger (D1 bis D6) für jeden Spannfinger eine Rille (130) mit einem Nocken (131) zum Steuern einer Walze (135), die zu dem Spannfinger gehört, aufweist, so dass, wenn die Walze (135) den Steuernocken (131) trifft, dieser Letztere eine Drehbewegung des Spannfingers veranlasst, die dann dem Finger das Spannen der Ringe erlaubt.

11. Vorrichtung nach Anspruch 10, **dadurch gekennzeichnet, dass** der Spanndurchmesser der Ringe verstellbar ist.

12. Vorrichtung nach Anspruch 11, **dadurch gekennzeichnet, dass** das Einstellen eines Spanndurchmessers der Ringe durch den Gebrauch eines Eichzylinders erzielt wird, und dass die Walze (135) für jeden Spannfinger in dem entsprechenden Nocken (131) vorwärts bewegt wird, um die Drehung des Fingers auszuführen, wobei ein Exzenter (138), der zu dem Finger gehört, dessen Einstellung die Spannbelastung der Ringe erlaubt.
